# EUROPÄISCHE PATENTANMELDUNG

(11) **EP 3 546 278 A1**
(43) Veröffentlichungstag der Anmeldung: **02.10.2019**
(21) Anmeldenummer: 19158062.0
(22) Anmeldetag: 19.02.2019
(51) Int. Cl.: B60L 53/12, B60L 53/14, B60L 53/34, B60L 53/35, B60L 53/37, B60L 53/38, B60L 53/68, H02G 11/02, B65H 75/42

(54) **LADEROBOTER UND VERFAHREN ZU DESSEN BETRIEB**

(30) Priorität: 29.03.2018 DE 102018204820
(71) Anmelder: Ford Global Technologies, LLC, Dearborn, MI 48126 (US)
(72) Erfinder: Sponheimer, Arnulf, 52072 Aachen (DE); Dr. Kees, Markus, 52072 Aachen (DE); Hobein, Bert, 52076 Aachen (DE)
(74) Vertreter: Dörfler, Thomas

(57) **Zusammenfassung**

Die Erfindung betrifft einen Laderoboter (1) zum Laden eines Akkumulators eines geparkten elektrisch angetriebenen Kraftfahrzeugs (4), wobei der Laderoboter (1) über ein Kabel (2) mit einer Stromversorgungseinrichtung (3) verbunden und dafür eingerichtet ist, selbsttätig zu dem Kraftfahrzeug (4) zu fahren und dessen Akkumulator mit elektrischem Strom zu laden. Gemäß der Erfindung enthält der Laderoboter (1) eine drehbare Kabelaufnahmespule, die dafür eingerichtet ist, das Kabel (2) in Übereinstimmung mit der Fortbewegung des Laderoboters (1) selbsttätig auf- und abzuspulen.

## Beschreibung

Die Erfindung betrifft einen Laderoboter in Form eines kleinen kabelgebundenen Fahrzeugs zum Laden eines Akkumulators eines geparkten elektrisch angetriebenen Kraftfahrzeugs, wobei der Laderoboter über ein Kabel mit einer Stromversorgungseinrichtung verbunden und dafür eingerichtet ist, selbsttätig zu dem Kraftfahrzeug zu fahren und dessen Akkumulator mit elektrischem Strom zu laden, und betrifft außerdem ein Verfahren zum Betrieb eines derartigen Laderoboters, gemäß den Oberbegriffen der unabhängigen Patentansprüche.

Elektrisch angetriebene Kraftfahrzeuge, worunter hier nicht nur rein batteriebetriebene Elektromobile, sondern auch alle Arten von Hybridelektrofahrzeugen mit zusätzlichem Verbrennungsmotor einschließlich Plug-in-Hybriden verstanden werden, benötigen eine entsprechende Lade-Infrastruktur. Doch droht die aus Emissionsschutzgründen angestrebte Verbreitung von Elektromobilität daran zu scheitern, dass nicht genügend Raum und finanzielle Mittel für eine ausreichende Zahl von Ladestationen zur Verfügung stehen, insbesondere nicht im öffentlichen Raum. Gerade in Städten mit ihrem dringenden Bedarf nach Emissionsminderung sind viele Fahrzeugbesitzer darauf angewiesen, ihr Fahrzeug auf öffentlichen Parkplätzen zu parken, oft am Straßenrand. Dort genügend Ladestationen für emissionsfreie oder emissionsarme Kraftfahrzeuge anzubieten, wird nicht so schnell gelingen.

So kamen im Jahr 2015 in Deutschland auf eine öffentliche Ladestation sieben elektrisch angetriebenes Kraftfahrzeuge, und es wird erwartet, dass dieses Missverhältnis mit zunehmender Zahl von elektrisch angetriebenen Kraftfahrzeugen noch zunimmt. Damit die wenigen öffentlichen Ladestationen nicht unnötig belegt werden, ist die erlaubte Parkzeit an öffentlichen Ladestationen begrenzt, weshalb ein längeres Parken und Laden insbesondere über Nacht nicht ohne weiteres möglich oder unverhältnismäßig teuer ist. Diese Umstände halten besonders Straßenrand-Parker davon ab, sich ein elektrisch angetriebenes Kraftfahrzeug anzuschaffen.

Die DE 10 2014 226 357 A1 offenbart einen Laderoboter mit den Merkmalen des Oberbegriffs von Patentanspruch 1, der eine bequemere und intensivere Nutzung von Ladestationen ermöglicht. Der Laderoboter kann unter das Kraftfahrzeug fahren und dort eine konduktive Verbindung mit einer im Unterboden eingebauten Ladebuchse herstellen. Ein zu der Ladebuchse passender konusförmiger Kontaktkopf ist über ein flexibles elektrisches Kabel mit einer Spannungsquelle in der Ladestation verbunden. Es wird vorgeschlagen, den Laderoboter mit mehreren, individuell und elektrisch angetriebenen Rädern oder Walzen zu versehen, die durch individuelles Ansteuern eine Steuerung der Bewegungsrichtung ermöglichen. Dieser Laderoboter soll auch nacheinander mehrere benachbart abgestellte Fahrzeuge automatisch kontaktieren und aufladen können.

Die DE 10 2017 003 656 U1 schlägt einen flachen Laderoboter mit Induktionsspule vor, der nach Beendigung eines Ladevorgangs über das Kabel in die Ladestation gezogen wird, welche eine Kabelrolle enthält.

Der Erfindung liegt die Aufgabe zu Grunde, einen Laderoboter bereitzustellen, mit dem die allgemeine Elektromobilität noch mehr gefördert wird.

Diese Aufgabe wird durch einen Laderoboter und ein Verfahren mit den Merkmalen der unabhängigen Patentansprüche gelöst.

Vorteilhafte Weiterbildungen der Erfindung sind in den abhängigen Patentansprüchen angegeben.

Die Erfindung beruht auf der Erkenntnis, dass bekannte fahrbare Laderoboter, welche das Kabel hinter sich her ziehen, ungünstig und/oder weiter entfernt geparkte Kraftfahrzeuge nur schwer bedienen können. Das Kabel kann sich verklemmen, z. B. unter einem Autoreifen, und/oder das Traktionsvermögen des Laderoboters reicht möglicherweise nicht aus, um eine Verklemmung zu lösen oder einen längeren Kabelstrang hinter sich herzuziehen.

Gemäß der Erfindung enthält der Laderoboter eine drehbare Kabelaufnahmespule, die dafür eingerichtet ist, das Kabel in Übereinstimmung mit der Fortbewegung des Laderoboters selbsttätig in den Laderoboter hinein bzw. daraus heraus auf- und abzuspulen.

Somit kann die Kabelaufnahmespule motorisch rotieren gelassen werden, während der Laderoboter zu dem Kraftfahrzeug oder zurück zu der Stromversorgungseinrichtung fährt, wobei die Geschwindigkeit, mit der das Kabel von dem Laderoboter abgegeben oder aufgenommen wird, mit der aktuellen Longitudinalgeschwindigkeit des Laderoboters synchronisiert wird. Dadurch legt der Laderoboter das Kabel entlang seines Fahrwegs ab bzw. nimmt es wieder auf, ohne wesentlichen Zug auf das Kabel auszuüben und ohne dass sich das Kabel verklemmen kann.

Somit wird es Nutzern von elektrisch angetriebenen Kraftfahrzeugen erleichtert, in der Nähe einer Ladestation einen Parkplatz zu finden, um das Kraftfahrzeug früher oder später von dem Laderoboter bedienen zu lassen, weil der Benutzer keine besonderen Anforderungen im Hinblick auf die Positionierung des Kraftfahrzeugs erfüllen muss. Zum Beispiel bei dem gattungsbildenden Laderoboter bestehen Einschränkungen im Hinblick auf die Entfernung des Kraftfahrzeugs von der Ladestation und seine Orientierung dazu.

Überdies erleichtert die Erfindung ein präzises Rangieren des Laderoboters unter dem Kraftfahrzeug, um sich genau auf einen Ladeverbinder am Kraftfahrzeug auszurichten, und zwar mit einer Genauigkeit, die für konduktives Laden notwendig und für induktives Laden energetisch am günstigsten ist, weil die beiderseitigen Induktionsspulen präzise aufeinander ausgerichtet und so nah wie möglich zusammengebracht werden können, so dass Luftspaltverluste minimiert werden.

Ein selbstfahrender Laderoboter, der so flach ist, dass er unter das auf einer ebenen Fläche geparkte Kraftfahrzeug fahren kann, indem er z. B. weniger hoch als eine Mindest-Bodenfreiheit der meisten PKW ist, hat gewöhnlich eine in Bezug auf die Parkfläche größere Breite und Länge als Höhe. In diesem Fall ist es vorteilhaft, die Kabelaufnahmespule so anzuordnen, dass ihre Drehachse parallel zu der Höhe des Laderoboters verläuft. Die Kabelaufnahmespule kann dann einen besonders großen Durchmesser haben, ohne die Abmessungen des Laderoboters wesentlich zu vergrößern, und kann mit relativ wenigen Umdrehungen eine relativ große Länge Kabel aufnehmen, und zwar auch dann, wenn das Kabel aufgrund seines Schutzmantels relativ steif ist.

Eine flache Bauweise bei gleichzeitiger Omnidirektionalität des Laderoboters, ohne dafür eine klassische Lenkung zu benötigen, wird vorteilhaft mittels einzeln angetriebener Mecanum-Laufräder erzielt.

Alternativ könnte der Laderoboter ein Raupenfahrzeug mit zwei oder vier einzeln angetriebenen Ketten- oder Raupenband-Laufwerken sein, um Hindernisse wie z. B. Bordsteine leichter überwinden zu können. Eine in dieser Hinsicht besonders vorteilhafte Ausführungsform ist, wenn jedes Ketten- oder Raupenband-Laufwerk mehrere in derselben Ebene in einer Reihe angeordnete Laufräder mit von einem Ende zum anderen Ende der Reihe größer werdenden Durchmessern aufweist, wobei jeweils nur das Laufrad mit dem kleinsten Durchmesser an dem Laderoboter gelagert ist und wobei jedes Laufwerk im Ganzen um die Drehachse des Laufrades mit dem kleinsten Durchmesser schwenkbar ist.

In einer bevorzugten Ausführungsform enthält der Laderoboter sowohl eine Induktionsladeeinrichtung wie z. B. eine Induktionsladefläche als auch einen Konduktionsladeverbinder wie z. B. einen CCS-Ladeverbinder.

Die Induktionsladeeinrichtung und der Konduktionsladeverbinder können nebeneinander angeordnet sein, und zwar - für leichtere Ausrichtbarkeit relativ zum Fahrzeug - vorzugsweise auf oder in einem motorisch drehbaren Drehtisch auf der Oberseite des Laderoboters. Der Konduktionsladeverbinder könnte alternativ zentrisch innerhalb der Induktionsladeeinrichtung angeordnet sein.

Der Laderoboter kann auch ein elektromotorisch, hydraulisch oder pneumatisch arbeitendes Hebewerk zum Anheben und Absenken der Induktionsladefläche und/oder des CCS-Ladeverbinders aufweisen.

Die Stromversorgungseinrichtung kann wie üblich eine fest installierte Ladestation sein.

In einer bevorzugten Weiterbildung der Erfindung, die dem Laderoboter einen überaus großen Aktionsradius verleiht, ist die Stromversorgungseinrichtung ein mobiler Energiespeicher, der dafür eingerichtet ist, im öffentlichen Straßenverkehr autonom zu einem angeforderten Ort zu fahren und einem oder mehreren dort geparkten elektrisch angetriebenen Kraftfahrzeugen während deren Parkzeit Energie zuzuführen. Dieser Energiespeicher kann den Laderoboter auf einer von seinem Boden absenkbaren Plattform mit sich führen.

Der mobile Energiespeicher kann eine Speichervorrichtung für Wasserstoff sowie eine Brennstoffzelle enthalten, insbesondere ein Wasserstoff-Sauerstoff-Brennstoffzellen-System, und kann dafür eingerichtet sein, geparkte Kraftfahrzeuge unter Verwendung des Laderoboters mit von der Brennstoffzelle aus dem gespeicherten Wasserstoff erzeugtem elektrischem Strom zu laden. Die Energiedichte von Wasserstoffspeichern ist um ein Vielfaches höher als jene von Akkumulatoren. Daher kann ein derartiger mobiler Energiespeicher bei gleichem Energiespeichervermögen wesentlich kompakter gebaut sein als mit Akkumulatoren. Auch kann ein derartiger mobiler Energiespeicher trotz seiner Kompaktheit mehrere Kraftfahrzeuge nacheinander laden, ohne zwischenzeitlich zu einer Wasserstoff-Ladestation zurückkehren zu müssen.

Es folgt eine Beschreibung von Ausführungsbeispielen anhand der Zeichnungen. Darin zeigen:
- Fig. 1: eine Prinzipskizze eines Kraftfahrzeugs an einer Säulen-Ladestation mit Laderoboter;
- Fig. 2: Draufsichten eines Kraftfahrzeugs an einer Wand-Ladestation mit Laderoboter;
- Fig. 3: links eine Draufsicht auf einen Laderoboter und rechts je eine schematische Schnittansicht, Frontansicht und Seitenansicht des Laderoboters;
- Fig. 4: links Draufsichten und rechts entsprechende vergrößerte Schnittansichten eines Laderoboters mit Schutzdeckeln in verschiedenen Öffnungsphasen;
- Fig. 5: zwei Draufsichten auf einen Laderoboter mit einem Drehtisch zum Drehen einer Ladeschnittstellen-Baugruppe;
- Fig. 6: zwei Draufsichten, die links einen Antrieb für den Drehtisch und rechts einen Antrieb für eine Kabelaufnahmespule veranschaulichen;
- Fig. 7: links eine Draufsicht und rechts eine Front- und eine Seitenansicht eines Laderoboters mit zwei Raupenband-Laufwerken;
- Fig. 8: links eine Draufsicht und rechts eine Front- und eine Seitenansicht eines Laderoboters mit vier Raupenband-Laufwerken;
- Fig. 9: Seitenansichten des Laderoboters von Fig. 8 in verschiedenen Phasen beim Überqueren einer Bordsteinkante;
- Fig. 10: schematische Schnittansichten und Draufsichten eines Kraftfahrzeugs und seiner Ladeschnittstellen;
- Fig. 11: eine Draufsicht auf einen Laderoboter wie in Figuren 3-6 mit schematisch eingezeichneter Elektronik;
- Fig. 12: eine detailliertere Schnittansicht durch den Laderoboter von Figuren 3-6 während des Ausrichtens auf ein Kraftfahrzeug;
- Fig. 13: eine detailliertere Schnittansicht durch den Laderoboter von Figuren 3-6 während des Ladens des Kraftfahrzeugs;
- Fig. 14: eine Draufsicht auf eine Mehrfach-Ladestation mit darum herum geparkten Kraftfahrzeugen;
- Fig. 15: eine Draufsicht auf eine Straßenrand-Ladestation mit in deren Nähe geparkten Kraftfahrzeugen;
- Fig. 16: schematische Schnittansichten eines mobilen Energiespeichers mit einem Laderoboter wie in Figuren 3-6.

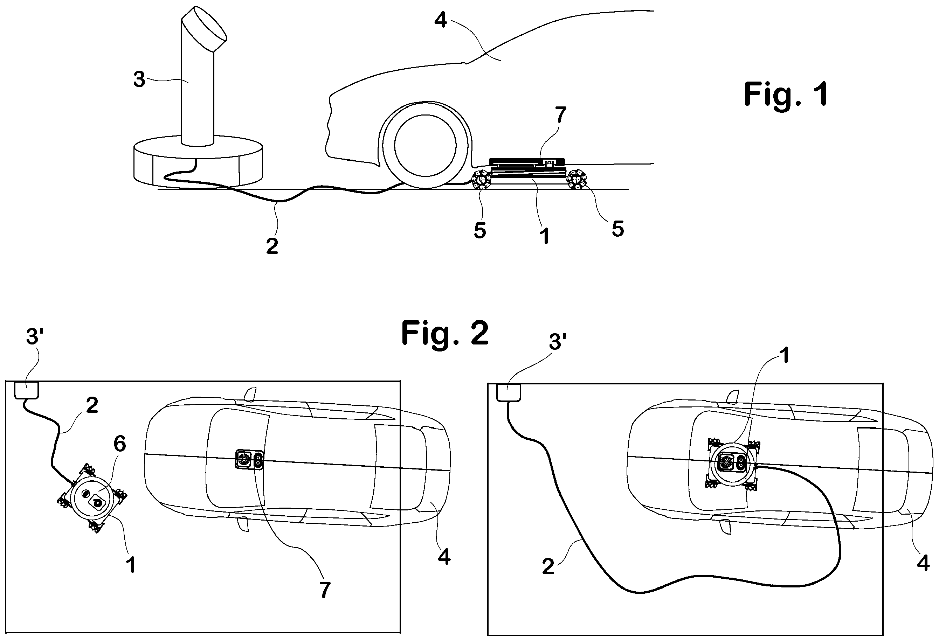

Fig. 1 zeigt einen Laderoboter 1 in Form eines kleinen kabelgebundenen Radfahrzeugs, das über ein Kabel 2, welches ein Gleichstrom-Ladekabel ist, welches auch Steuerleitungen enthalten kann, mit einer Säulen-Ladestation 3 verbunden ist. Der Laderoboter 1 ist an der Ladestation 3 stationiert und ist dafür eingerichtet, selbsttätig zu einem an der Ladestation 3 geparkten elektrisch angetriebenen Kraftfahrzeug 4 zu fahren und dessen Akkumulator mit elektrischem Strom zu laden.

Dazu kann der Besitzer des Kraftfahrzeugs 4 an einem Bedienfeld der Ladestation 3 oder mittels einer Smartphone-App ein elektrisches Laden des Kraftfahrzeugs 4 anfordern, wobei er auch angeben kann, wann er voraussichtlich wieder abfahren möchte und wie viel Strom geladen werden soll, z. B. voll oder halb voll.

Die Steuerelektronik der Ladestation 3 und/oder des Laderoboters 1 kann mittels geeigneter Sensorik oder über eine geeignete Funkverbindung zum Kraftfahrzeug 4 mit entsprechender Rückmeldung vom Kraftfahrzeug über diese Funkverbindung feststellen, wo genau das Kraftfahrzeug 4 geparkt ist, und sie kann prüfen, ob darunter genügend Platz für den Laderoboter 1 ist. Beispielsweise sendet die Ladestation 3 oder der Laderoboter 1 über Funk eine Anfrage an das Kraftfahrzeug über die genaue Position des Fahrzeuges und darüber ob Laden möglich ist, was z. B. die durch die Funkanfrage getriggerte fahrzeugeigene Messung der Bodenfreiheit an dem Ladeport 7 unter dem Kraftfahrzeug über geeignete Sensoren beinhaltet. Die Steuerelektronik berechnet eine Trajektorie, entlang der Laderoboter 1 in die in Fig. 1 gezeigte Position unter dem Kraftfahrzeug 4 gesteuert wird, in der er das Kraftfahrzeug 4 laden kann.

Der Laderoboter 1 ist in diesem Ausführungsbeispiel mit vier sog. Mecanum-Rädern 5 ausgestattet, die jeweils von einem kleinen Elektromotor angetrieben werden und mit denen der Laderoboter 1 omnidirektionale Fahrmanöver durchführen kann, einschließlich z. B. Drehen an Ort und Stelle und Fahren quer zu seiner Längsrichtung, ohne eine mechanische Lenkung zu benötigen. Derartige Räder sind z. B. in der DE 2 354 404 A1 beschrieben.

Der Laderoboter 1 und das Kraftfahrzeug 4 verfügen über Sensorsysteme, die z. B. induktiv oder per Infrarot, Ultraschall oder Kamera arbeiten, um sich gegenseitig detektieren zu können, damit sich der Laderoboter 1 genau auf das Kraftfahrzeug 4 ausrichten kann, so dass eine Induktions- und/oder Konduktionsladeeinrichtung am Laderoboter 1 mit einem entsprechenden Gegenstück am Kraftfahrzeug 4 zusammenarbeiten kann. Die Sensorsysteme des Laderoboters 1 verleihen ihm auch die Fähigkeit, im Rahmen durch die Länge des Kabels 2 gegebenen Aktionsradius autonom zu manövrieren und das Kraftfahrzeug 4 zu finden, ggf. in Zusammenarbeit mit den Sensorsystemen des Kraftfahrzeugs 4 und/oder speziellen Reflektoren am Kraftfahrzeug 4.

Der Laderoboter 1 bezieht seine Antriebsenergie aus der über das Kabel 2 zugeführten Ladespannung, indem er deren Hochvolt-Spannung in eine Niedervolt-Gleichspannung umwandelt. Nachdem der Laderoboter 1 die richtige Position unter dem Kraftfahrzeug 4 gefunden hat, hebt er eine Baugruppe aus einer Induktionsladefläche und einem CCS-Ladeverbinder an und stellt so die Verbindung mit einer Induktionsladefläche oder einem CCS-Ladeverbinder in einer Ladeschnittstellen-Baugruppe 7 am Fahrzeugboden her, je nachdem, welche dieser beiden Schnittstellen am Kraftfahrzeug 4 vorhanden oder besser geeignet ist. Dies wird weiter unten näher erläutert.

Weiter unten wird auch näher erläutert, dass der Laderoboter 1 das Kabel 2 nicht einfach hinter sich herzieht, wenn er zu dem und unter das Kraftfahrzeug 4 fährt, sondern eine motorisch drehbare Kabelaufnahmespule, -rolle oder -trommel an Bord hat, von der er das Kabel mit der aktuellen Longitudinalgeschwindigkeit des Laderoboters abspult. Beim Zurückfahren zu der Ladestation 3 nimmt der Laderoboter 1 denselben Weg, über den er gekommen ist, und spult das Kabel 2 wieder auf.

Dadurch hat der Laderoboter 1 sehr viel Freiheit, seinen Weg zu dem Kraftfahrzeug 4 und seine Endposition unter dem Kraftfahrzeug zu wählen, wie in Fig. 2 für eine Parkfläche mit einer Wand-Ladestation 3' veranschaulicht. Insbesondere kann der Laderoboter 1 einen Weg wählen, bei dem keine Gefahr besteht, dass das Kabel 2 unter einem Fahrzeugreifen festklemmt, und er kann seine Ladeposition aus einer Richtung anfahren, in der er schon im richtigen Winkel zum Kraftfahrzeug 4 steht, damit eine Ladeschnittstellen-Baugruppe 6 oben auf dem Laderoboter 1 korrekt auf die Ladeschnittstellen-Baugruppe 7 am Unterboden des Kraftfahrzeugs 4 ausgerichtet ist.

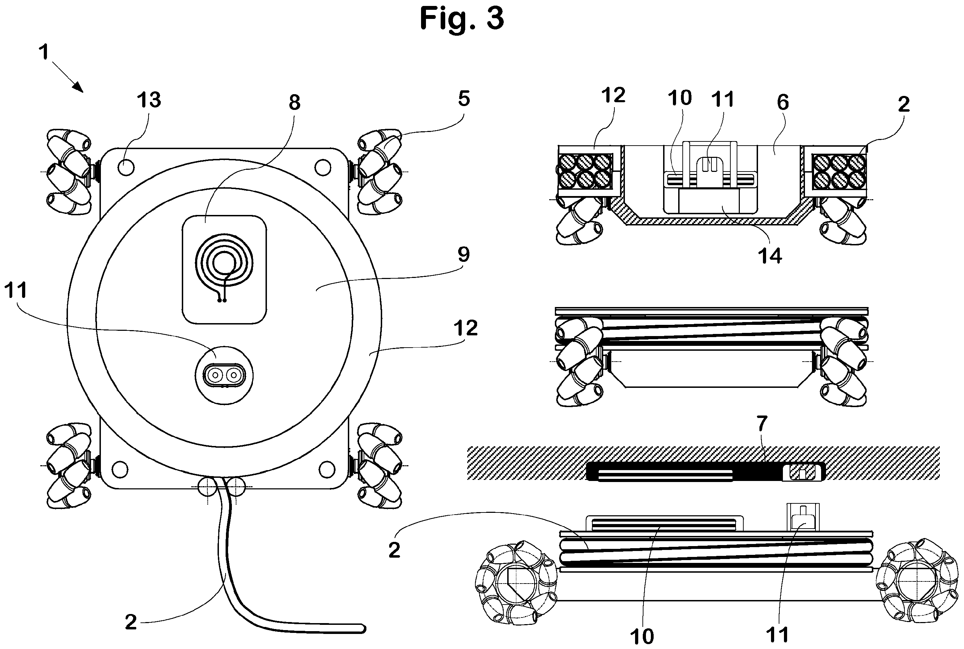

Wie in Fig. 3 gezeigt, enthält der Laderoboter 1 ein Chassis 8, das von den Mecanum-Rädern 5 getragen wird und das einen auf dem Chassis 8 drehbaren Drehtisch 9, der die Induktionsladefläche 10 und der CCS-Ladeverbinder 11 enthält- Außerdem enthält der Laderoboter 1 eine den Drehtisch 9 umgebende drehbare Kabelaufnahmespule 12 zum Auf- und Abspulen des Kabels 2, das dabei zwischen zwei Führungsrollen am Chassis 8 hindurchläuft, sowie Positionierungssensoren 13 am Chassis 8.

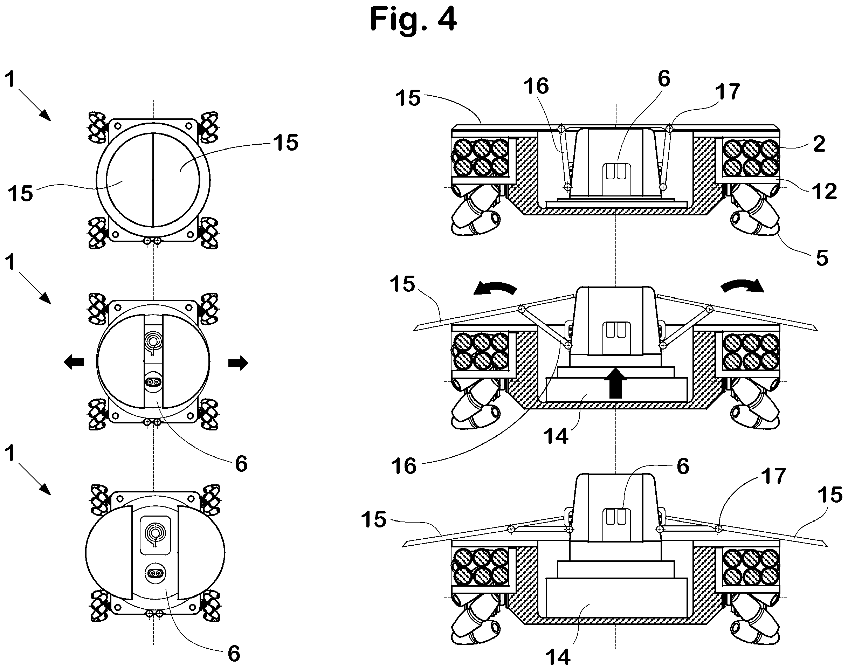

Die Seitenansicht rechts unten in Fig. 3 ist auch eine partielle vergrößerte Ansicht des Bereichs von Fig. 4, in dem sich der Laderoboter 1 und ein darüber liegender Abschnitt des Unterbodens des Kraftfahrzeugs 4 befinden, in dem die Induktionsladefläche 10 und der CCS-Ladeverbinder 11 der Ladeschnittstellen-Baugruppe 6 eingebaut sind.

Nicht in Fig. 3, jedoch in den Skizzen auf der rechten Hälfte von Fig. 4 ist ein Hebewerk 14 gezeigt, welches die gesamte Ladeschnittstellen-Baugruppe 6 im Ganzen von dem Drehtisch 9 nach oben heben kann, wie in drei verschiedenen Phasen gezeigt, wobei die Bewegung in der Bewegungsphase mit einem Pfeil angezeigt ist. Das Hebewerk 14 kann z. B. eine in Fig. 4 angedeutete Elektropneumatik oder Elektrohydraulik, ein elektrischer Linear-Aktuator oder ein Scheren-Hebewerk mit elektrischem Spindelantrieb sein.

Der Laderoboter 1 kann außerdem eine Schutzabdeckung aufweisen, die in Fig. 4 durch zwei halbkreisförmige Schutzdeckel 15 gebildet wird, die über Hebel 16 und Hebelgelenke 17 auseinander bewegt und dadurch automatisch geöffnet werden, wenn das Hebewerk 14 die Ladeschnittstellen-Baugruppe 6 anhebt, wie in Fig. 4 mit Pfeilen angezeigt.

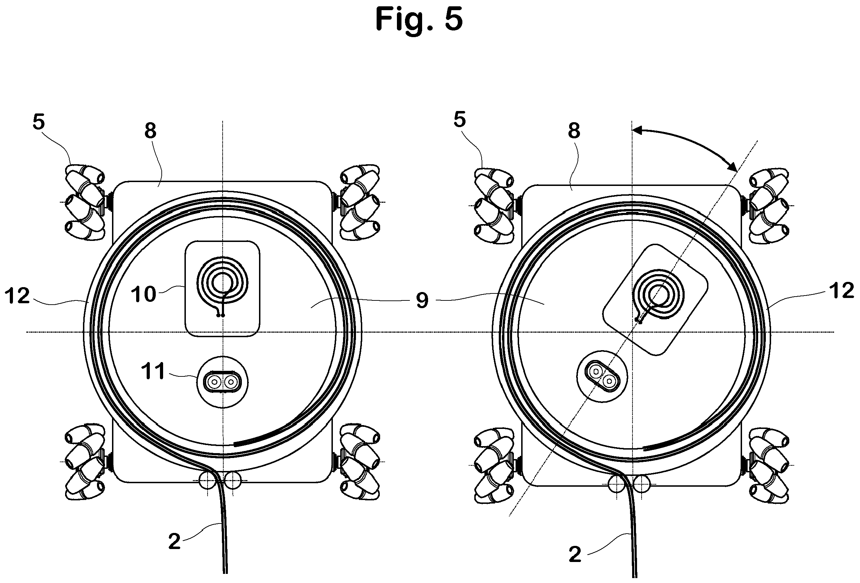

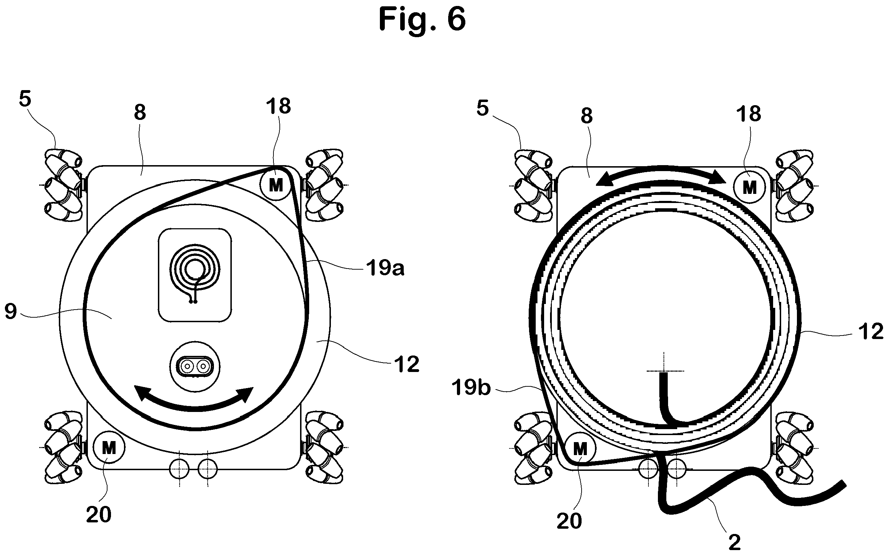

Wie sich der Drehtisch 9 mit der Induktionsladefläche 10 und dem CCS-Ladeverbinder 11 drehen kann, ist in Fig. 5 veranschaulicht, und Fig. 6 zeigt in der linken Hälfte, wie die Drehung des Drehtisches 9 mittels eines Riemenantriebs bewerkstelligt werden kann, der einen Elektromotor 18 auf dem Chassis 8 und einen um den Drehtisch 9 und den Elektromotor 18 geschlungenen Antriebsriemen 19a umfasst.

Die Kabelaufnahmespule 12 kann mittels eines weiteren Riemenantriebs gedreht werden, der einen Elektromotor 20 auf dem Chassis 8 und einen um die Kabelaufnahmespule 12 und den Elektromotor 20 geschlungenen Antriebsriemen 19b umfasst, wie in der rechten Hälfte von Fig. 6 veranschaulicht. Das innere Ende des mehr oder weniger auf der Kabelaufnahmespule 12 aufgewickelten Kabels 2 kann z. B. über Schleifkontakte elektrisch mit einem drehfesten Teil des Chassis 8 verbunden sein. Die Elektromotoren 18, 20 sind vorzugsweise Niederspannungs-Gleichstrommotoren.

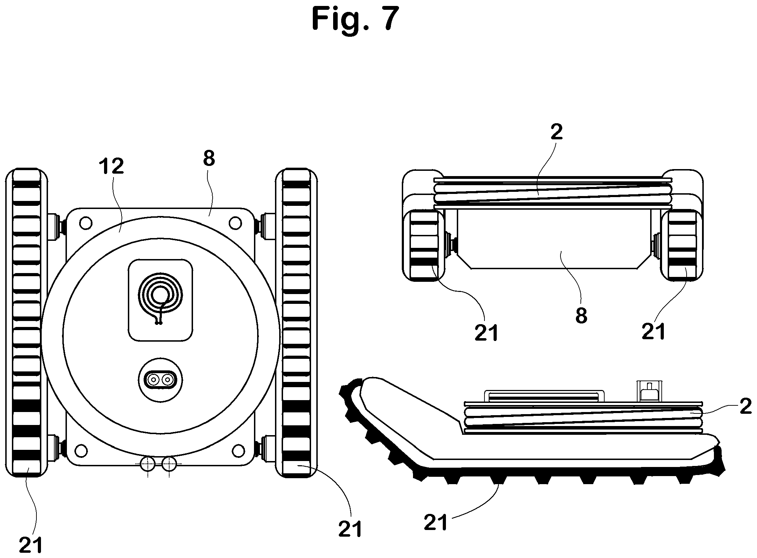

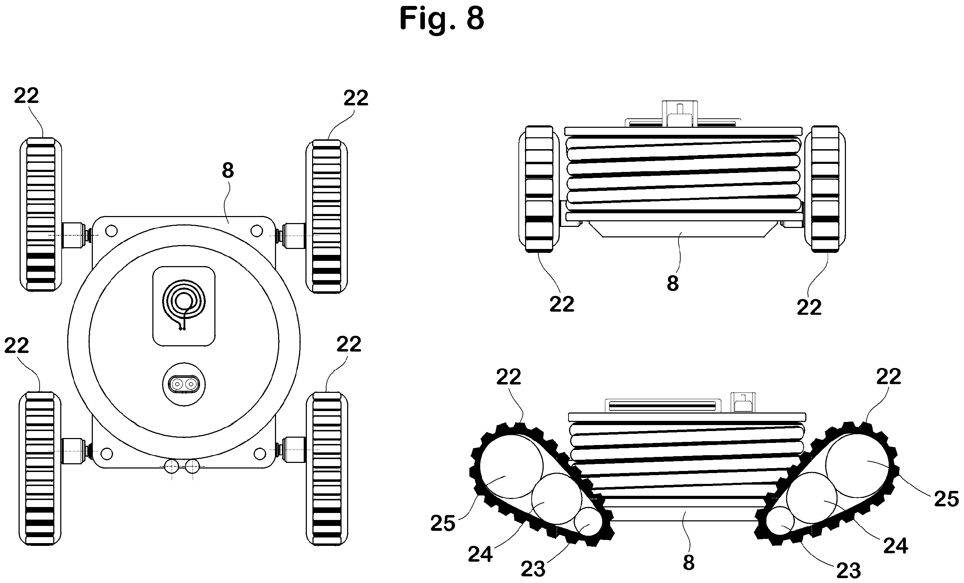

Der Laderoboter 1 kann an Stelle von Rädern wie z. B. den Mecanum-Rädern 5 mit Raupenband-Laufwerken versehen sein. Fig. 7 zeigt ein Ausführungsbeispiel mit zwei langgestreckten Raupenband-Laufwerken 21, einem auf jeder Seite, und Fig. 8 zeigt ein Ausführungsbeispiel mit vier kürzeren Raupenband-Laufwerken 22, einem an Stelle jedes Rades.

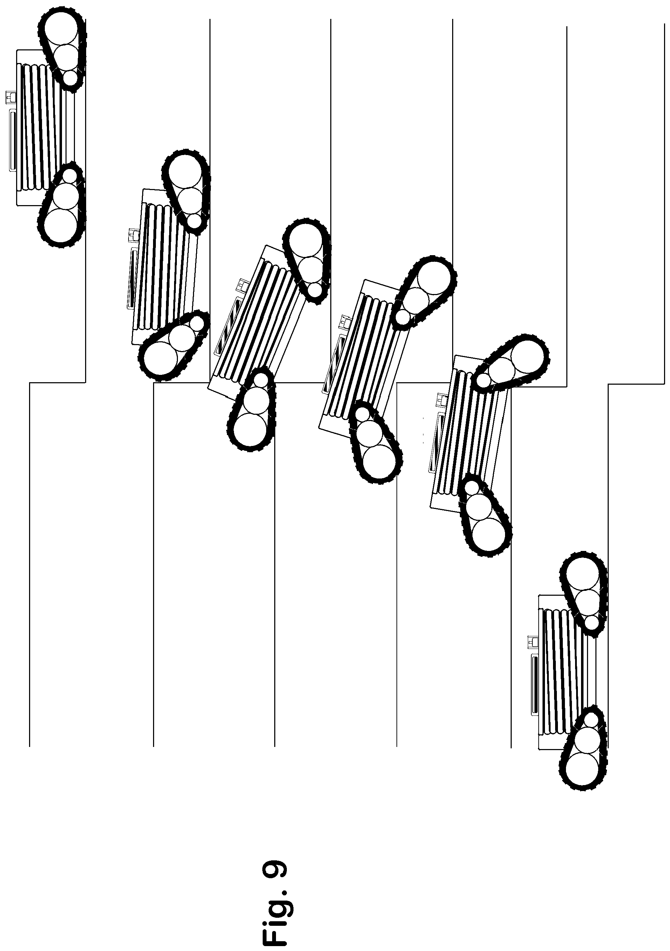

In Fig. 8 enthält jedes Laufwerk 22 drei in derselben Ebene in einer Reihe angeordnete Laufräder 23, 24, 25 mit von einem Ende zum anderen Ende der Reihe größer werdenden Durchmessern, wobei jeweils nur das Laufrad 23 mit dem kleinsten Durchmesser an dem Laderoboter 1 gelagert ist und wobei jedes Laufwerk 22 im Ganzen um die Drehachse des Laufrades 23 schwenkbar ist. Ein derartiges Laufwerk 22 ermöglicht es, bei geringer Bauhöhe auch eine relativ hohe Bordsteinkante 26 zu überqueren, wie in Fig. 9 in verschiedenen Phasen veranschaulicht.

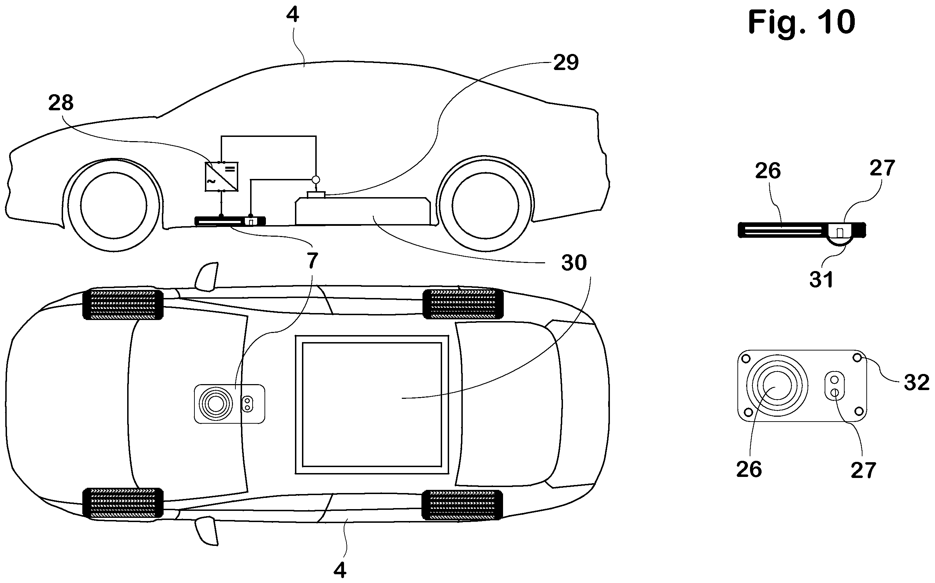

Wie oben erwähnt und in Fig. 10 veranschaulicht, besitzt das Kraftfahrzeug 4 die am Fahrzeugboden angeordnete Ladeschnittstellen-Baugruppe 7, die eine Induktionsladefläche 26 und/oder einen CCS-Ladeverbinder 27 aufweist, sowie ein standardisiertes Fahrzeug-Ladestation-Kommunikationssystem.

Die Induktionsladefläche 26 ist über einen Wechselstrom/Gleichstrom-Wandler 28 mit einem Akkumulator-Anschluss und -Managementsystem 29 eines Hochvolt-Ackumulators 30 des Fahrzeugs 2 verbunden. Der CCS-Ladeverbinder 27 ist direkt mit dem Anschluss 29 des Hochvolt-Akkumulators 30 verbunden.

Eine aus zwei gegen die Kraft einer eingebauten Feder auseinander klappbaren Hälften bestehende Schutzkappe 31 am CCS-Ladeverbinder 27 wird von dem CCS-Ladeverbinder 11 am Laderoboter 1 geöffnet, wenn dessen Ladeschnittstellen-Baugruppe 6 angehoben wird. Ebenso wie am Laderoboter 1 befinden sich auch an der Ladeschnittstellen-Baugruppe 25 Positionierungssensoren 32 wie z. B. Ultraschall- oder Infrarot-Sender/Empfänger, mit deren Hilfe sich der Laderoboter 1 richtig unter dem Kraftfahrzeug 4 positionieren und damit verbinden kann.

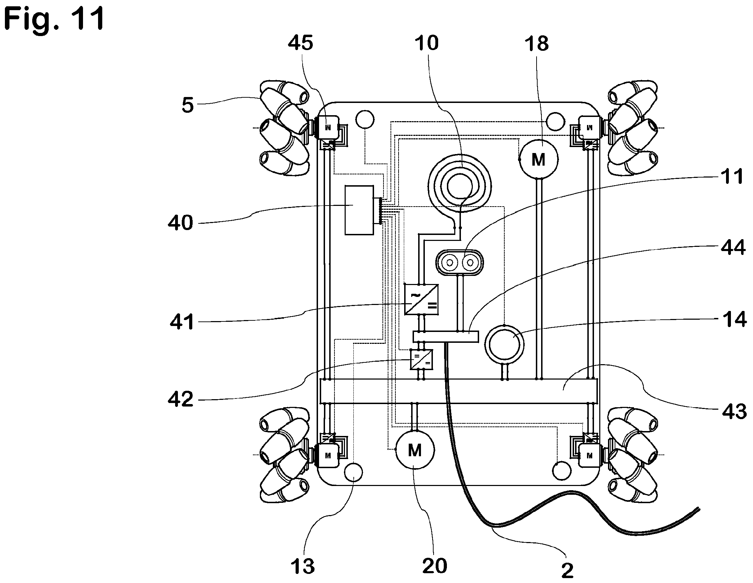

Wie in Fig. 11 veranschaulicht, enthält der Laderoboter 1 eine elektronische Steuereinheit (ECU) 40, einen Gleichstrom-Wechselstrom-Wandler 41 zum Erzeugen eines hochfrequenten Induktionsfeldes für die Induktionsladefläche 10, einen Hochvolt-Niedervolt-Gleichspannungswandler 42 zum Speisen des CCS-Ladeverbinders 11 während Gleichstrom-Schnellladen sowie der übrigen Niedervolt-Komponenten des Laderoboters, die Positionierungssensoren 13, wie z. B. Ultraschall- oder Infrarot-Sender/Empfänger oder ein Kamerasystem, den Elektromotor 20 zum Drehen der Kabelaufnahmespule 12, das Kabel 2, eine Niedervolt-Stromverteilungseinheit 43 mit integrierter Schmelzsicherungsbox, das Hebewerk 14 zum Anheben und Absenken der Ladeschnittstellen-Baugruppe 6, eine Hochvolt-Stromverteilungseinheit 44 mit integrierter Schmelzsicherungsbox, den CCS-Ladeverbinder 11, die Induktionsladefläche 10, den Elektromotor 18 zum Drehen des Drehtisches 9 sowie vier unabhängig voneinander ansteuerbare Traktionseinheiten 45, die jeweils einen bürstenlosen Gleichstrommotor (d. h., mit integriertem Wechselrichter) enthalten, zum Antrieb der Mecanum-Räder 5.

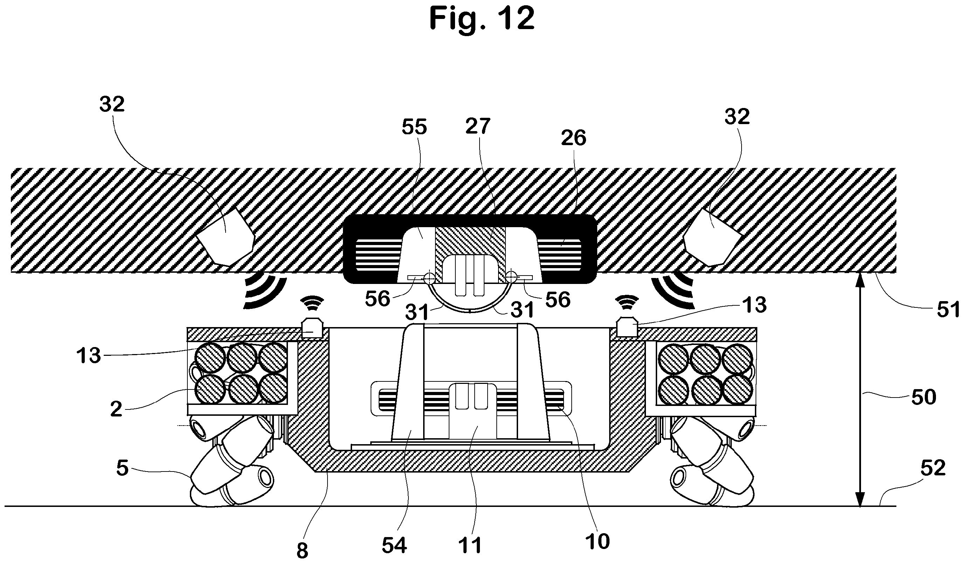

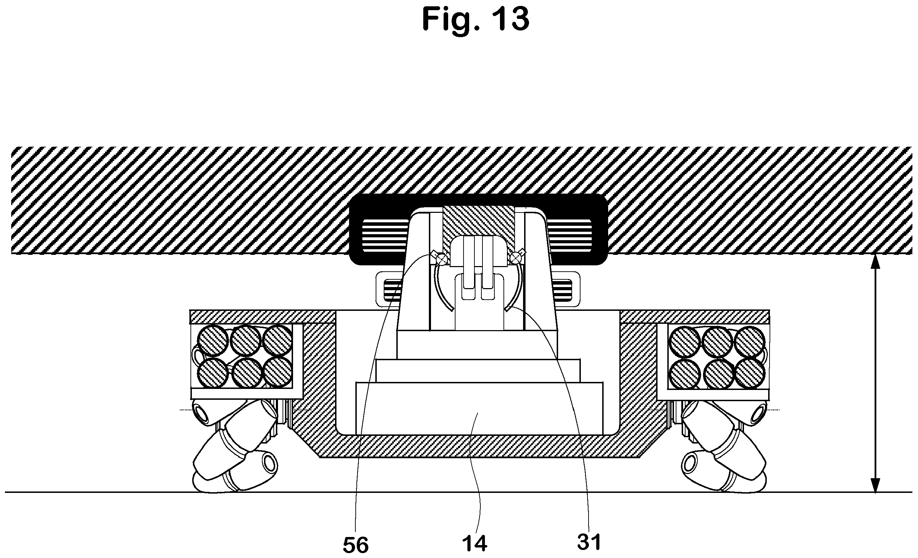

Figuren 12 und 13 veranschaulichen den Laderoboter 1 von Figuren 3-6 während des Ausrichtens auf das Kraftfahrzeug 4 und während des Ladens des Kraftfahrzeugs 4. Der Laderoboter 1 ist flacher als die Mindest-Bodenfreiheit 50 des Kraftfahrzeugs 4 und passt daher zwischen dessen Unterboden 51 und die Parkplatzoberfläche 52.

Der Laderoboter 1 enthält neben den schon erwähnten Teilen einen Führungskonus 54, der in eine komplementäre Ausnehmung 55 in der Ladeschnittstellen-Baugruppe 7 passt, für mechanische Zentrierung und Fixierung.

Wenn die Ladeschnittstellen-Baugruppe 6 angehoben wird, werden die beiden Hälften der Schutzkappe 31 gegen die Kräfte von nicht gezeigten Federn auseinander geklappt, indem daran angebrachte Vorsprünge 56 von dem Führungskonus 54 nach oben gedrückt werden, wie in Fig. 13 erkennbar. Sodann ist die Ladeverbindung hergestellt bzw. kann elektrisch hergestellt werden.

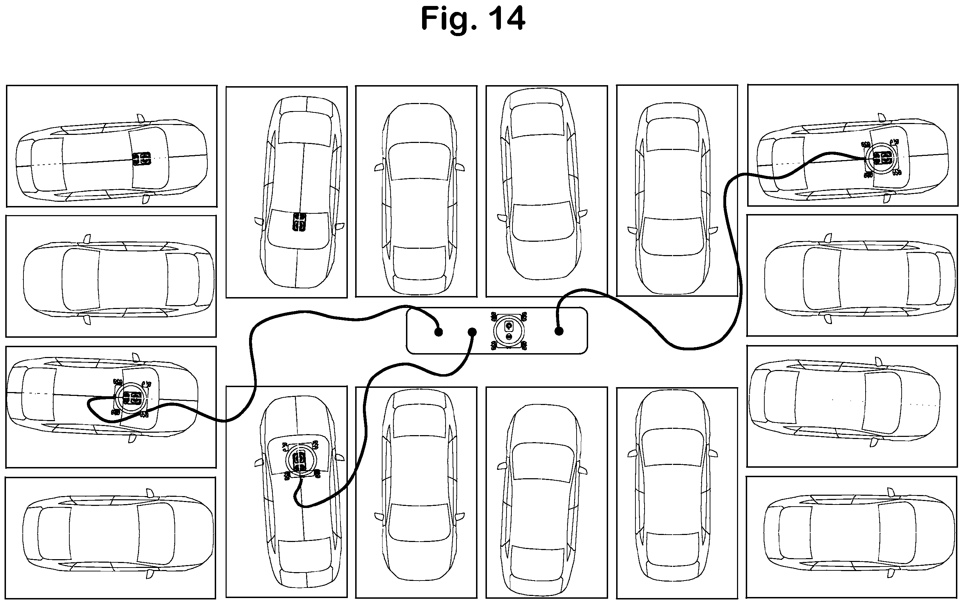

Die beschriebenen Laderoboter 1 erlauben es, Ladestationen und Mehrfach-Ladestationen mit hohem Nutzungsgrad zu konstruieren. So zeigt Fig. 14 ein Beispiel mit vier nahe beieinander angeordneten Ladestationen und sechzehn darum herum geparkten Kraftfahrzeugen, die nacheinander geladen werden können. Man erkennt, dass Laderoboter, die ihr Ladekabel von einer an Bord befindlichen Spule abspulen, Kraftfahrzeuge erreichen und laden können, die für sie wahrscheinlich nicht zugänglich wären, wenn sie das Kabel einfach hinter sich herziehen würden.

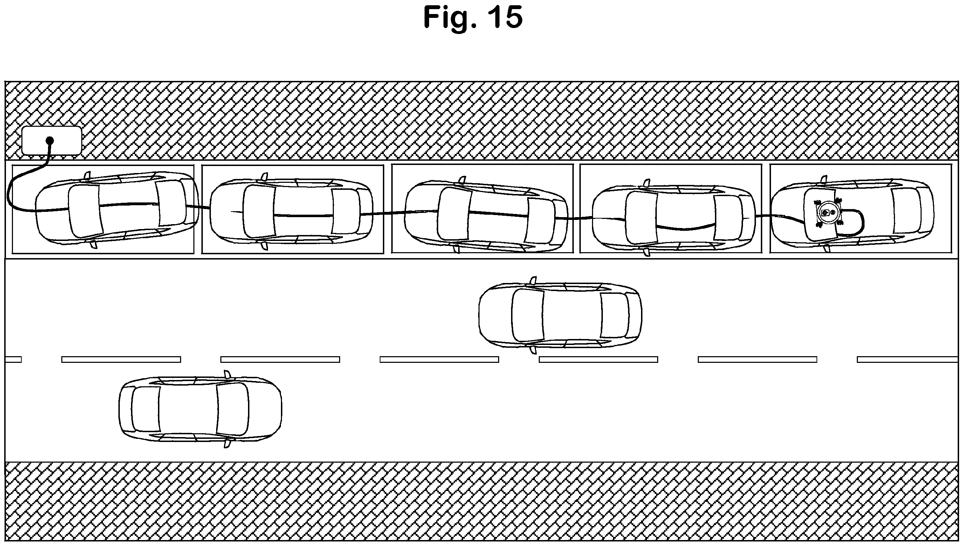

Ähnliches gilt für die in Fig. 15 gezeigte Situation, in mindestens fünf Kraftfahrzeuge oder mehr jeweils in beide Richtungen von der Ladestation ausgehend an einem Straßenrand geparkt sind und von einer einzigen Ladestation nacheinander geladen werden können, indem der Laderoboter einfach unter den Fahrzeugen hindurch fährt.

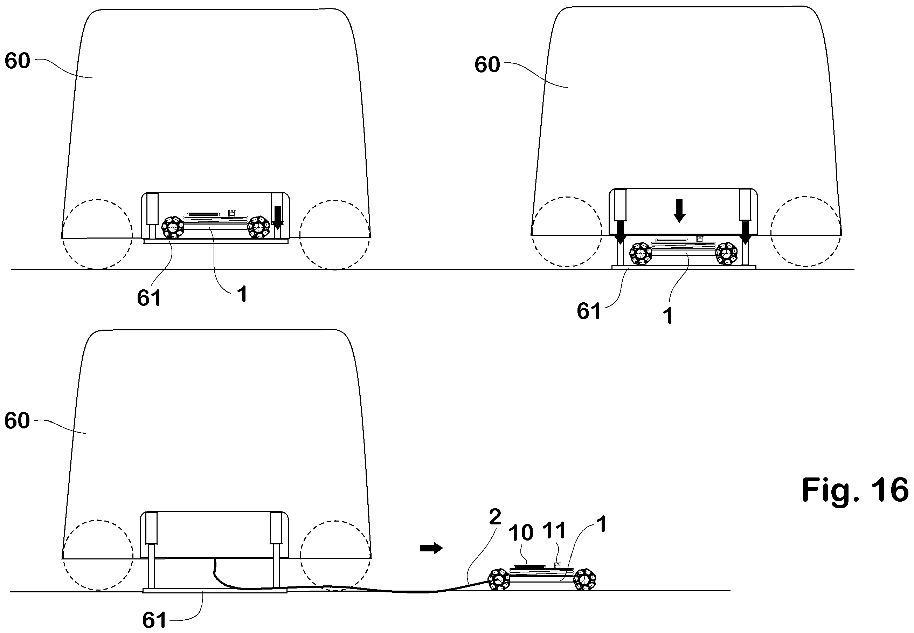

Wie in Fig. 16 veranschaulicht, kann der Laderoboter 1 statt mit einer fest installierten Ladestation 3, 3' mit einem mobilen Energiespeicher 60 verbunden sein, der dem Laderoboter 1 einen noch viel größeren Aktionsradius verleiht. Der mobile Energiespeicher 60 ist dafür eingerichtet, im öffentlichen Straßenverkehr autonom zu einem angeforderten Ort zu fahren und einem oder mehreren dort geparkten elektrisch angetriebenen Kraftfahrzeugen während deren Parkzeit Energie zuzuführen. Der mobile Energiespeicher 60 kann den Laderoboter 1 auf einer von seinem Boden absenkbaren Plattform 61 mit sich führen.

Ein Besitzer eines elektrisch angetriebenen Kraftfahrzeugs, das an einem über öffentliche Straßen erreichbaren Ort geparkt ist, kann ein elektrisches Laden des Fahrzeugs mittels des autonom fahrenden mobilen Energiespeichers 60 anfordern, indem er z. B. eine von einem Betreiber des mobilen Energiespeichers 60 bereitgestellte App auf sein Smartphone lädt und mittels der App angibt, wann er voraussichtlich wieder abfahren möchte und wie viel Strom geladen werden soll, z. B. voll oder halb voll.

Das Smartphone sendet diese Informationen über eine Mobilfunkverbindung an eine Steuerzentrale, welche das Kraftfahrzeug mittels einer Mobilfunkverbindung und im Kraftfahrzeug eingebautem GPS ortet. Die Steuerzentrale kann auch den Ladezustand und den Typ des Akkumulators des Kraftfahrzeugs prüfen, und ob Laden möglich ist. Das Kraftfahrzeug kann prüfen, ob darunter genügend Platz für den Laderoboter 1 ist, und es kann seine Position und den Ladezustand auch selbst prüfen und die selbst ermittelten Daten an die Steuerzentrale senden.

Die Steuerzentrale verarbeitet die Ladeanforderung unter Verwendung einer Cloud und von intelligenten Verteilungs- und Ablaufplanungsalgorithmen, um eine Trajektorie, welcher der mobile Energiespeicher 60 folgen soll, sowie eine Reihenfolge von Lade-Diensten zu berechnen, die sich nach dem Zeitrang der Lade-Anforderungen richten kann.

Der mobile Energiespeicher 60 ist ein Radfahrzeug mit der Fähigkeit, autonom im öffentlichen Straßenverkehr zu fahren, und befördert Wasserstoff, der gasförmig und/oder in verflüssigter Form oder in einem Speichermedium wie z. B. einem flüssigen organischen Wasserstoffträger (LOHC) durch chemische Reaktion umkehrbar gespeichert ist. Der mobile Energiespeicher 60 kann an einer Wasserstoff-Tankstelle, an der er auch stationiert sein kann, von Service-Personal oder automatisch betankt werden.

Dem mobilen Energiespeicher 60 wird über eine Mobilfunkverbindung befohlen, zu dem zu ladenden Kraftfahrzeug zu fahren. Sobald er dieses erreicht hat, geht der mobile Energiespeicher 60 per Fahrzeug-Fahrzeug-Kommunikation in einen sog. Handshake-Betrieb mit dem Kraftfahrzeug, positioniert sich in dessen Nähe, gibt seinen Laderoboter 1 frei und lässt diesen unter das Kraftfahrzeug fahren und es laden, wie für die vorhergehenden Ausführungsbeispiele beschrieben.

Fig. 16 zeigt den Laderoboter 1 in verschiedenen Betriebsphasen. Der Laderoboter 1 steht normalerweise auf der absenkbaren Plattform 61 am Boden des mobilen Energiespeichers 60. Am Ort des zu ladenden Kraftfahrzeugs wird die Plattform 61 bis auf Straßenniveau abgesenkt, und der Laderoboter 1 fährt von der Plattform 61 herunter und so unter das Kraftfahrzeug, dass die Induktionsladefläche 10 oder der CCS-Ladeverbinder 11 des Laderoboters 1 mit seinem entsprechenden Gegenstück am Kraftfahrzeug zusammenarbeiten kann.

Danach beginnt das Brennstoffzellen-System im mobilen Energiespeicher 60, elektrischen Strom zu erzeugen, mit dem der Hochvolt-Akkumulator des Kraftfahrzeugs über einen Gleichspannungswandler im mobilen Energiespeicher 60 geladen wird. Die Umwandlung der im Wasserstoff gespeicherten Energie in elektrischen Strom und später zurück erzeugt keine anderen Emissionen als unschädlichen Wasserdampf, weshalb der hier beschriebene mobile Energiespeicher 60 und das beschriebene Verfahren besonders für Städte geeignet sind, die emissionsfreien Verkehr fordern.

Wenn das Laden beendet ist, trennt der Laderoboter 1 die Verbindung, fährt zum mobilen Energiespeicher 60 zurück und wird wieder in den mobilen Energiespeicher 60 gehoben, welcher dann zum nächsten zu ladenden Kraftfahrzeug oder ggf. zurück zu einer Wasserstoff-Tankstelle fährt.

Der mobile Energiespeicher 60 kann mit Sensorsystemen versehen sein, wie sie für autonomes Fahren benötigt werden und an sich bekannt sind, z. B. Lidar, Radar, Videokameras, hochauflösendem GPS und odometrischen Sensoren für hochaufgelöste Positionsmessungen.

Der mobile Energiespeicher 60 kann z. B. je nach Menge des mitgeführten Wasserstoffs von etwa halb so lang bis etwa die Länge mit etwa der halben Breite eines Mittelklasse-PKWs und ebenso hoch oder höher sein. Mit derartigen Abmessungen wird der mobile Energiespeicher 60 in der Regel irgendeine Position vor, neben oder hinter dem einem Kraftfahrzeug finden, in der er genügend lange stehen bleiben kann, ohne anderen Verkehr wesentlich zu behindern.

Berechnungen haben gezeigt, dass ein mobiler Energiespeicher 60 mit den vorgenannten Abmessungen eine Menge Wasserstoff speichern und transportieren kann, die ausreicht, um ca. 10 Batteriefahrzeuge mit einer 100 kWh Batterie oder 33 Batteriefahrzeuge mit einer 30 kWh Batterie oder 100 Plugin-Hybridfahrzeuge mit einer 10 kWh Plugin-Batterie zu laden, oder entsprechend mehr Kraftfahrzeuge, wenn nicht alle vollständig geladen werden müssen. Der mobile Energiespeicher 60 sollte Schnellladen ermöglichen, was typischerweise maximal ca. 1 Stunde dauert, so dass der mobile Energiespeicher 60 ca. zehn Kraftfahrzeuge z. B. über Nacht nacheinander vollständig laden kann und erst dann zu der Wasserstoff-Tankstelle zurücckehren muss.

In einem typischen realen Szenario und unter Berücksichtigung auch der Fahrzeiten zwischen den zu ladenden Kraftfahrzeugen lässt sich ferner zeigen, dass ca. 39 derartige mobile Energiespeicher ausreichen würden, um ca. 2033 Elektrofahrzeuge (Mix aus Batteriefahrzeugen mit sehr großem und mittlerem Batteriespeicher sowie Plugin-Hybridfahrzeugen) einem Tag in einer Stadt zu bedienen. Dies macht die tägliche Suche von Besitzern von elektrisch angetriebenen Kraftfahrzeugen nach einer freien Ladestation obsolet. Sie können Ihr Kraftfahrzeug laden lassen, wenn es ihnen zeitlich passt, und müssen auch nicht umparken, wenn das Laden beendet ist.

Außerdem kann die Zahl der nötigen öffentlichen Ladestationen drastisch reduziert werden, was hohe Investitionskosten für Lade-Infrastruktur einspart. Mobile Energiespeicher verringern auch den Verkehr, der mit dem Aufsuchen von festen Ladestationen verbunden ist, da sie wegen des Energieträgers Wasserstoff ein Vielfaches der Energie speichern können, die in entsprechend schweren und großen Akkumulatoren speicherbar sind, so dass jeder mobile Energiespeicher mehrere Kraftfahrzeuge laden kann und dabei eine optimierte Route nehmen kann, bevor er Wasserstoff nachtanken muss.

Ferner können Spitzenbelastungen des Stromnetzes reduziert werden, da das Laden zeitlich von der aktuellen Netzlast entkoppelt wird. Der Wasserstoff kann aus erneuerbaren Energien erzeugt werden, und zwar in Zeiten, in denen besonders viel Strom z. B. aus Windrädern und Solaranlagen anfällt. Eine hohe Anzahl von mobilen Energiespeichern bildet daher einen zeitlichen Puffer zwischen Stromerzeugung und Stromverbrauch.

Mobile Energiespeicher wie oben beschrieben können auch zum Schnellladen von elektrisch angetriebenen Kraftfahrzeugen angefordert werden, die wegen zu geringer Ladung liegen geblieben sind, und sie können auch zum Betanken von mit Wasserstoff betriebenen Kraftfahrzeugen verwendet werden, wenn entsprechende Anschlüsse vorhanden sind. Sie können auch zur temporären Stromversorgung von Immobilien angefordert werden, z. B. bei Stromausfällen aufgrund von Bauarbeiten, oder z. B. zur temporären Stromversorgung von Baumaschinen.

## Patentansprüche

1. Laderoboter (1) zum Laden eines Akkumulators eines geparkten elektrisch angetriebenen Kraftfahrzeugs (4), wobei der Laderoboter (1) über ein Kabel (2) mit einer Stromversorgungseinrichtung (3; 3'; 60) verbunden und dafür eingerichtet ist, selbsttätig zu dem Kraftfahrzeug (4) zu fahren und dessen Akkumulator mit elektrischem Strom zu laden,
**dadurch gekennzeichnet, dass**
der Laderoboter (1) eine drehbare Kabelaufnahmespule (12) enthält, die dafür eingerichtet ist, das Kabel (2) in Übereinstimmung mit der Fortbewegung des Laderoboters (1) selbsttätig auf- und abzuspulen.

2. Laderoboter (1) nach Anspruch 1,
**dadurch gekennzeichnet, dass**
der Laderoboter (1) eine größere Breite und Länge als Höhe hat und dass die Kabelaufnahmespule (12) so angeordnet ist, dass ihre Drehachse parallel zu der Höhe des Laderoboters (1) verläuft.

3. Laderoboter (1) nach Anspruch 1 oder 2,
**dadurch gekennzeichnet, dass**
der Laderoboter (1) einschließlich seiner Kabelaufnahmespule (12) so flach ist, dass er unter das auf einer ebenen Fläche geparkte Kraftfahrzeug (4) fahren kann.

4. Laderoboter (1) nach einem der vorhergehenden Ansprüche,
**dadurch gekennzeichnet, dass**
der Laderoboter (1) ein Radfahrzeug mit vier einzeln angetriebenen Mecanum-Laufrädern (5) ist.

5. Laderoboter (1) nach einem der Ansprüche 1 bis 4,
**dadurch gekennzeichnet, dass**
der Laderoboter (1) ein Raupenfahrzeug mit zwei oder vier einzeln angetriebenen Ketten- oder Raupenband-Laufwerken (21; 22) ist.

6. Laderoboter (1) nach Anspruch 5,
**dadurch gekennzeichnet, dass**
jedes Ketten- oder Raupenband-Laufwerk (22) mehrere in derselben Ebene in einer Reihe angeordnete Laufräder (23, 24, 25) mit von einem Ende zum anderen Ende der Reihe größer werdenden Durchmessern aufweist, wobei jeweils nur das Laufrad (23) mit dem kleinsten Durchmesser an dem Laderoboter (1) gelagert ist und wobei jedes Laufwerk (22) im Ganzen um die Drehachse des Laufrades (23) mit dem kleinsten Durchmesser schwenkbar ist.

7. Laderoboter (1) nach einem der vorhergehenden Ansprüche,
**dadurch gekennzeichnet, dass**
der Laderoboter (1) eine Induktionsladeeinrichtung (10) und/oder einen Konduktionsladeverbinder, insbesondere einen CCS-Ladeverbinder (11), aufweist.

8. Laderoboter (1) nach einem der vorhergehenden Ansprüche,
**dadurch gekennzeichnet, dass**
die Induktionsladeeinrichtung (10) und der Konduktionsladeverbinder (11) nebeneinander auf oder in einem motorisch drehbaren Drehtisch (9) auf der Oberseite des Laderoboters (1) angeordnet sind und/oder elektromotorisch, hydraulisch oder pneumatisch anhebbar sind.

9. Laderoboter (1) nach einem der vorhergehenden Ansprüche,
**dadurch gekennzeichnet, dass**
die Stromversorgungseinrichtung eine fest installierte Ladestation (3, 3') ist.

10. Laderoboter (1) nach einem der vorhergehenden Ansprüche,
**dadurch gekennzeichnet, dass**
die Stromversorgungseinrichtung ein mobiler Energiespeicher (60) ist, der dafür eingerichtet ist, im öffentlichen Straßenverkehr autonom zu einem angeforderten Ort zu fahren und einem oder mehreren dort geparkten elektrisch angetriebenen Kraftfahrzeugen während deren Parkzeit Energie zuzuführen.

11. Laderoboter (1) nach Anspruch 10,
**dadurch gekennzeichnet, dass**
der mobile Energiespeicher (60) eine Speichervorrichtung für Wasserstoff sowie eine Brennstoffzelle enthält und dafür eingerichtet ist, geparkte Kraftfahrzeuge mit von der Brennstoffzelle aus dem gespeicherten Wasserstoff erzeugtem elektrischem Strom zu laden.

12. Laderoboter (1) nach Anspruch 10 oder 11,
**dadurch gekennzeichnet, dass**
der mobile Energiespeicher (60) den Laderoboter (1) auf einer absenkbaren Plattform (61) am Boden des mobilen Energiespeichers (60) mit sich führt.

13. Verfahren zum Betrieb eines Laderoboters (1) nach einem der vorhergehenden Ansprüche,
**dadurch gekennzeichnet, dass**
die Kabelaufnahmespule (12) motorisch rotieren gelassen wird, während der Laderoboter (1) zu dem Kraftfahrzeug (4) oder zurück zu der Stromversorgungseinrichtung (3; 3'; 60) fährt, wobei die Geschwindigkeit, mit der das Kabel (2) von dem Laderoboter (1) abgegeben oder aufgenommen wird, mit der aktuellen Longitudinalgeschwindigkeit des Laderoboters (1) synchronisiert wird.

14. Verfahren zum Betrieb eines Laderoboters (1) nach einem der vorhergehenden Ansprüche,
**dadurch gekennzeichnet, dass**
das zu ladende Kraftfahrzeug eine entsprechende CCS Gleichstrom-Steckverbindungs- und/oder Induktionslade-Empfänger-Einheit (7) aufweist, die durch entsprechende Positionsgeber geeignet ist, eine genau ausgerichtete Position des Laderoboters unter dem Fahrzeug zu ermöglichen.

15. Verfahren zum Betrieb eines Laderoboters (1) nach einem der vorhergehenden Ansprüche,
**dadurch gekennzeichnet, dass**
das zu ladende Kraftfahrzeug an seiner Ladeschnittstellen-Baugruppe (7) entsprechende Sensoren (32) besitzt, die geeignet sind, durch eine Abstandsmessung eine ausreichende Bodenfreiheit für das Positionieren des Laderoboters unter dem Fahrzeug festzustellen und dass
das Kraftfahrzeug diesen Zustand über eine geeignete Einrichtung per Funkdatenverbindung an die Stromversorgungseinrichtung und/oder den Laderoboter (1) übermittelt.
